(19) Europäisches Patentamt / European Patent Office / Office européen des brevets

(11) **EP 2 688 270 A1**

(12) **EUROPEAN PATENT APPLICATION**

(43) Date of publication:
**22.01.2014 Bulletin 2014/04**

(51) Int Cl.:
**H04M 1/22** *(2006.01)*

(21) Application number: **13166776.8**

(22) Date of filing: **07.05.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **20.07.2012 KR 20120079149**

(71) Applicant: **LG Electronics, Inc.**
**Seoul, 150-721 (KR)**

(72) Inventor: **Jung, Euijung**
**153-801 Seoul (KR)**

(74) Representative: **Ter Meer Steinmeister & Partner**
**Patentanwälte**
**Mauerkircherstrasse 45**
**81679 München (DE)**

(54) **Mobile terminal and method of controlling a mobile terminal**

(57) A mobile terminal includes a controller to change a brightness of a screen at a predetermined rate based on a predetermined condition and to maintain the screen brightness at a threshold value when the screen brightness reaches the threshold value. The predetermined condition may be based on at least one of screen activation, adaption time, ambient illumination, initial brightness value, occurrence of user activity, or a watching time of a user.

FIG. 2

EP 2 688 270 A1

**Description**

This application claims the benefit of and priority to Korean Patent Application No. 10-2012-0079149 filed on July, 20, 2012, the entire contents of which are hereby incorporated by reference.

BACKGROUND

1. Field

One or more embodiments described herein relate to a mobile terminal.

2. Background

The human retina contains two types of photoreceptor cells, cones and rods. The two types of photoreceptor cells function separately in response to light intensity within the field of view of the eye, and differ in density and distribution across the retina.

The functions of these cells are also different from one another. Cones mostly concentrate in the central spot of the retina (known as the macula) and provide color sensitivity, reaction in bright light, and perception of finer detail. Rods concentrate about 20 degrees away in the periphery of the retina and are used to perceive objects in black and white, support peripheral vision detecting objects' motion, and handle vision in low light. When adapting to changes in brightness, the functions of the cones and rods may be taken into consideration.

Smart phones, tablets, and other electronic devices do not function in a manner that allows for brightness adaptation to the human eye when, for example, going between rooms or locations of different brightness or when other changes in lighting conditions take place. Additionally, or alternatively, these devices do not provide for control of brightness or other aspects of display screens which allow for improved viewing by a user.

**SUMMARY OF THE INVENTION**

According to one embodiment, a mobile terminal comprises a display module and a controller which decreases screen brightness after the screen is turned on. When the screen brightness reaches a threshold value, the display module is controlled to maintain the screen brightness at the threshold value. Another embodiment is directed to a method for controlling a display module.

BRIEF DESCRIPTION OF THE DRAWINGS

FIG. 1 shows one embodiment of a mobile terminal.
FIG. 2 shows one embodiment of a method for controlling a mobile terminal.
FIG. 3 shows an example of controlling brightness of a mobile terminal.
FIG. 4 shows an example of operating a mobile terminal in ABS mode.
FIG. 5 shows an example of controlling brightness as the screen is turned on.
FIG. 6 shows another embodiment of a method to control a mobile terminal.
FIG. 7 shows another method for controlling screen brightness.

DETAILED DESCRIPTION

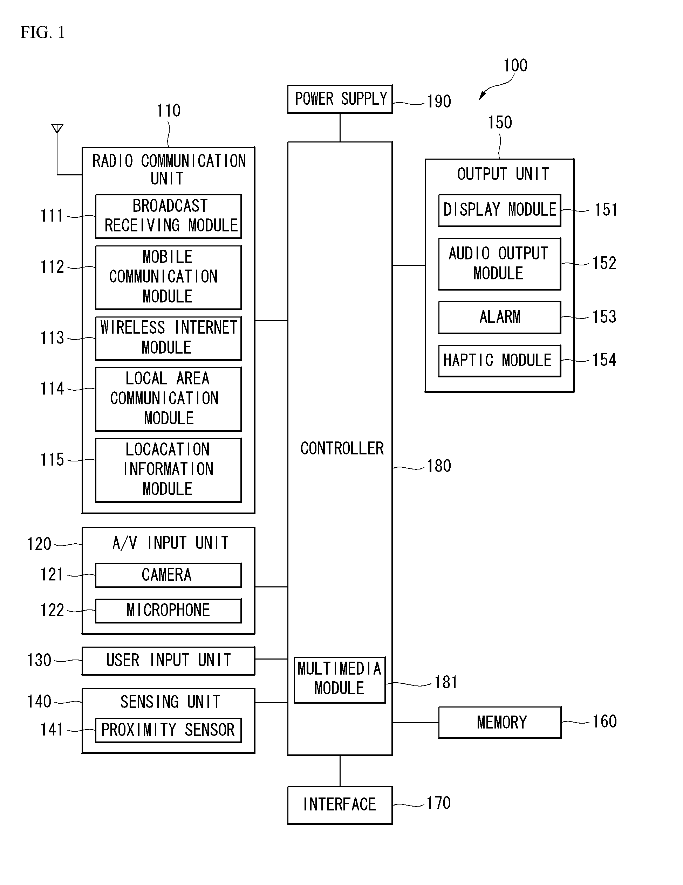

FIG. 1 shows one embodiment of a mobile terminal 100 which includes a wireless communication unit 110, an audio/video (A/V) input unit 120, a user input unit 130, a sensing unit 140, an output unit 150, a memory 160, an interface unit 170, a controller 180, and a power supply 190. The mobile terminal may be, for example, a cellular phone, a smart phone, a laptop computer, a digital broadcasting terminal, a personal digital assistant (PDA), a portable multimedia player (PMP), a navigation system, a gaming system, or any other device that includes a display screen. (Not all of the components shown in FIG. 1 are essential, and the number of components included in the mobile terminal 100 may be varied).

The wireless communication unit 110 may include at least one module that enables wireless communication between mobile terminal 100 and a wireless communication system, or between the mobile terminal 100 and a network in which the mobile terminal 100 is located. For example, the wireless communication unit 110 may include a broadcast receiving module 111, a mobile communication module 112, a wireless Internet module 113, a local area (or short-range) communication module 114, and a location information (or position-location) module 115.

The broadcast receiving module 111 may receive broadcasting signals and/or broadcasting related information from an external broadcasting management server through a broadcasting channel. The broadcasting channel may include a satellite channel and a terrestrial channel, and the broadcasting management server may be a server that generates and transmits broadcasting signals and/or broadcasting related information or a server that receives previously created broadcasting signals and/or broadcasting related information and transmits the broadcasting signals and/or broadcasting related information to a terminal.

The broadcasting signals may include not only TV broadcasting signals, wireless broadcasting signals, and data broadcasting signals, but also signals in the form of a combination of a TV broadcasting signal and a radio broadcasting signal. The broadcasting related information may be information on a broadcasting channel, a broadcasting program or a broadcasting service provider, and may be provided even through a mobile communication network. In the latter case, the broadcasting related information may be received by the mobile communication module 112.

The broadcasting related information may exist in any of various forms. For example, the broadcasting related information may exist in the form of an electronic program guide (EPG) of a digital multimedia broadcasting (DMB) system or in the form of an electronic service guide (ESG) of a digital video broadcast-handheld (DVB-H) system.

The broadcast receiving module 111 may receive broadcasting signals using various broadcasting systems. More particularly, the broadcast receiving module 111 may receive digital broadcasting signals using digital broadcasting systems such as a digital multimedia broadcasting-terrestrial (DMB-T) system, a digital multimedia broadcasting-satellite (DMB-S) system, a media forward link only (MediaFLOTM) system, a DVB-H system, and an integrated services digital broadcast-terrestrial (ISDB-T) system. The broadcast receiving module 111 may receive signals from broadcasting systems providing broadcasting signals other than the above-described digital broadcasting systems.

The broadcasting signals and/or broadcasting related information received through the broadcast receiving module 111 may be stored in the memory 160. The mobile communication module 112 may transmit/receive a wireless signal to/from at least one of a base station, an external terminal and a server on a mobile communication network. The wireless signal may include a voice call signal, a video call signal or data in various forms according to the transmission and reception of text/multimedia messages.

The wireless Internet module 113 may correspond to a module for wireless Internet access and may be included in the mobile terminal 100 or may be externally attached to the mobile terminal 100. Wireless LAN (WLAN or Wi-Fi), wireless broadband (WibroTM), world interoperability for microwave access (WimaxTM), high speed downlink packet access (HSDPA) and other technologies may be used as a wireless Internet technique.

The local area communication module 114 may correspond to a module for local area communication. Further, BluetoothTM, radio frequency identification (RFID), infrared data association (IrDA), ultra wideband (UWB) and/or Zig-BeeTM may be used as a local area communication technique.

The position-location module 115 may confirm or obtain the position of the mobile terminal 100. The position-location module 115 may obtain position information by using a global navigation satellite system (GNSS). The GNSS may, for example, be a radio navigation satellite system that revolves around the earth and transmits reference signals to predetermined types of radio navigation receivers such that the radio navigation receivers may determine their positions on the earth's surface or near the earth's surface.

The GNSS may include a global positioning system (GPS) of the United States, Galileo of Europe, a global orbiting navigational satellite system (GLONASS) of Russia, COMPASS of China, and/or a quasi-zenith satellite system (QZSS) of Japan.

A global positioning system (GPS) module is one example of the position-location module 115. The GPS module 115 may calculate information regarding distances between one point or object and at least three satellites and information regarding a time when the distance information is measured and apply trigonometry to the obtained distance information to obtain three-dimensional position information on the point or object according to latitude, longitude and altitude at a predetermined time.

A method of calculating position and time information using three satellites and correcting the calculated position and time information using another satellite may also be used. In addition, the GPS module 115 may continuously calculate the current position in real time and calculate velocity information using the location or position information.

As shown in FIG. 1, the A/V input unit 120 may input an audio signal or a video signal and include a camera 121 and a microphone 122. The camera 121 may process image frames of still images or moving pictures obtained by an image sensor in a video call mode or a photographing mode. The processed image frames may be displayed on a display module 151 which may be a touch screen.

The image frames processed by the camera 121 may be stored in the memory 160 or may be transmitted to an external device through the wireless communication unit 110. The mobile terminal 100 may also include at least two cameras 121.

The microphone 122 may receive an external audio signal in a call mode, a recording mode or a speech recognition mode and process the received audio signal into electronic audio data. The audio data may then be converted into a form that may be transmitted to a mobile communication base station through the mobile communication module 112 and output in the call mode. The microphone 122 may employ various noise removal algorithms (or noise canceling algorithms) for removing or reducing noise generated when the external audio signal is received.

The user input unit 130 may receive input data required for controlling the mobile terminal 100 from a user. The user input unit 130 may include a keypad, a dome switch, a touch pad (e.g., constant voltage/capacitance), a jog wheel, and a jog switch.

The sensing unit 140 may sense a current state of the mobile terminal 100, such as an open/closed state of the mobile terminal 100, a position of the mobile terminal 100, whether a user touches the mobile terminal 100, a direction of the mobile terminal 100, and acceleration/deceleration of the mobile terminal 100, and generate a sensing signal required for controlling the mobile terminal 100. For example, if the mobile terminal 100 is a slide phone, the sensing unit 140 may sense whether the slide phone is opened or closed. Further, the sensing unit 140 may sense whether the power supply 190 supplies power and/or whether the interface unit 170 is connected to an external device. The sensing unit 140 may also include a proximity sensor 141.

The output unit 150 may generate visual, auditory and/or tactile output and may include the display module 151, an audio output module 152, an alarm unit 153 and a haptic module 154. The display module 151 may display information processed by the mobile terminal 100. The display module 151 may display a user interface (UI) or a graphic user interface (GUI) related to a voice call when the mobile terminal 100 is in the call mode. The display module 151 may also display a captured and/or received image and a UI or a GUI when the mobile terminal 100 is in the video call mode or the photographing mode.

In addition, the display module 151 may include at least a liquid crystal display, a thin film transistor liquid crystal display, an organic light-emitting diode display, a flexible display or a three-dimensional display. Some of these displays may be of a transparent type or a light transmissive type. That is, the display module 151 may include a transparent display.

The transparent display may include a transparent liquid crystal display. The rear of the display module 151 may include a light transmissive type display. Accordingly, a user may be able to see an object located behind the body of the mobile terminal 100 through the transparent portion of the display unit 151 on the body of the mobile terminal 100.

The mobile terminal 100 may also include at least two display modules 151. For example, the mobile terminal 100 may include a plurality of display modules 151 that are arranged on a single face of the mobile terminal 100 and spaced apart from each other at a predetermined distance or that are integrated together. The plurality of display modules 151 may also be arranged on different sides of the mobile terminal 100.

Further, when the display module 151 and a touch-sensing sensor (hereafter referred to as a touch sensor) form a layered structure that is referred to as a touch screen, the display module 151 may be used as an input device in addition to an output device. The touch sensor may be in the form of a touch film, a touch sheet, or a touch pad, for example.

The touch sensor may convert a variation in pressure, applied to a specific portion of the display module 151, or a variation in capacitance, generated at a specific portion of the display module 151, into an electric input signal. The touch sensor may sense pressure, position, and an area (or size) of the touch.

When the user applies a touch input to the touch sensor, a signal corresponding to the touch input may be transmitted to a touch controller. The touch controller may then process the signal and transmit data corresponding to the processed signal to the controller 180. Accordingly, the controller 180 may detect a touched portion of the display module 151.

The proximity sensor 141 of the sensing unit 140 may be located in an internal region of the mobile terminal 100, surrounded by the touch screen, or near the touch screen. The proximity sensor 141 may sense the presence of an object approaching a predetermined sensing face or an object located near the proximity sensor using an electromagnetic force or infrared rays without mechanical contact. The proximity sensor 141 may have a lifetime longer than a contact sensor and may thus be more appropriate for use in the mobile terminal 100.

The proximity sensor 141 may include a transmission type photoelectric sensor, a direct reflection type photoelectric sensor, a mirror reflection type photoelectric sensor, a high-frequency oscillating proximity sensor, a capacitive proximity sensor, a magnetic proximity sensor, and/or an infrared proximity sensor. A capacitive touch screen may be constructed such that proximity of a pointer is detected through a variation in an electric field according to the proximity of the pointer. The touch screen (touch sensor) may be considered as a proximity sensor 141.

For the convenience of description, an action in which a pointer approaches the touch screen without actually touching the touch screen may be referred to as a proximity touch, and an action in which the pointer is brought into contact with the touch screen may be referred to as a contact touch. The proximity touch point of the pointer on the touch screen may correspond to a point of the touch screen at which the pointer is perpendicular to the touch screen.

The proximity sensor 141 may sense the proximity touch and a proximity touch pattern (e.g., a proximity touch distance, a proximity touch direction, a proximity touch velocity, a proximity touch time, a proximity touch position, a proximity touch moving state). Information corresponding to the sensed proximity touch action and proximity touch pattern may then be displayed on the touch screen.

The audio output module 152 may output audio data received from the wireless communication unit 110 or stored in the memory 160 in a call signal receiving mode, a call mode or a recording mode, a speech recognition mode and a broadcast receiving mode. The audio output module 152 may output audio signals related to functions performed in the mobile terminal 100, such as a call signal incoming tone and a message incoming tone. The audio output module 152 may include a receiver, a speaker, and/or a buzzer. The audio output module 152 may output sounds through an earphone jack. The user may listen to the sounds by connecting an earphone to the earphone jack.

The alarm unit 153 may output a signal indicating generation (or occurrence) of an event of the mobile terminal 100. For example, alarms may be generated when a call signal or a message is received and when a key signal or a touch is input. The alarm unit 153 may also output signals different from video signals or audio signals, for example, a signal indicating generation of an event through vibration. The video signals or the audio signals may also be output through the display module 151 or the audio output module 152.

The haptic module 154 may generate various haptic effects that the user may feel. One of the haptic effects is vibration. The intensity and/or pattern of a vibration generated by the haptic module 154 may also be controlled. For example, different vibrations may be combined with each other and output or may be sequentially output.

The haptic module 154 may generate a variety of haptic effects including an effect attributed to an arrangement of pins vertically moving against a contact skin surface, an effect attributed to a jet force or a suctioning force of air through a jet hole or a suction hole, an effect attributed to a rubbing of the skin, an effect attributed to contact with an electrode, an effect of stimulus attributed to an electrostatic force, and an effect attributed to a reproduction of cold and warmth using an element for absorbing or radiating heat in addition to vibrations.

The haptic module 154 may not only transmit haptic effects through direct contact but may also allow the user to feel haptic effects through the user's fingers or arms. The mobile terminal 100 may also include a plurality of haptic modules 154.

The memory 160 may store a program for operating the controller 180 and temporarily store input/output data such as a phone book, messages, still images, and/or moving pictures. The memory 160 may also store data regarding various patterns of vibrations and sounds that are output from when a touch input is applied to the touch screen.

The memory 160 may include at least a flash memory, a hard disk type memory, a multimedia card micro type memory, a card type memory such as SD or XD memory, a random access memory (RAM), a static RAM (SRAM), a read-only memory (ROM), an electrically erasable programmable ROM (EEPROM), a programmable ROM (PROM) magnetic memory, a magnetic disk, or an optical disk. The mobile terminal 100 may also operate in association with a web storage performing the storage function of the memory 160 on the Internet.

The interface unit 170 may serve as a path to external devices connected to the mobile terminal 100. The interface unit 170 may receive data or power from the external devices, transmit the data or power to internal components of the mobile terminal 100, or transmit data of the mobile terminal 100 to the external devices. For example, the interface unit 170 may include a wired/wireless headset port, an external charger port, a wired/wireless data port, a memory card port, a port for connecting a device having a user identification module, an audio I/O port, a video I/O port, and/or an earphone port.

The interface unit 170 may also interface with a user identification module that is a chip that stores information for authenticating authority to use the mobile terminal 100. For example, the user identification module may be a user identity module (UIM), a subscriber identity module (SIM) and a universal subscriber identify module (USIM). An identification device including the user identification module may also be manufactured in the form of a smart card. Accordingly, the identification device may be connected to the mobile terminal 100 through a port of the interface unit 170.

The interface unit 170 may also be a path through which power from an external cradle is provided to the mobile terminal 100 when the mobile terminal 100 is connected to the external cradle or a path through which various command signals input by the user through the cradle are provided to the mobile terminal 100. The various command signals or power input from the cradle may be used as signals for checking whether the mobile terminal 100 is correctly settled (or loaded) in the cradle.

The controller 180 may control overall operations of the mobile terminal 100. For example, the controller 180 may control and process voice communication, data communication and/or a video call. The controller 180 may also include a multimedia module 181 for playing a multimedia file. The multimedia module 181 may be included in the controller 180 as shown in FIG. 1 or may be separated from the controller 180.

The controller 180 may perform a pattern recognition process of recognizing handwriting input or picture-drawing input applied to the touch screen as characters or images. The power supply 190 may receive external power and internal power and provide power required for operating the components of the mobile terminal 100 under the control of the controller 180.

According to a hardware implementation, one or more embodiments may be implemented using at least application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and/or electrical units for executing functions. The embodiments may be implemented using the controller 180.

According to a software implementation, one or more embodiments may be implemented using a separate software module executing at least one function or operation. Software code may be implemented according to a software application written in an appropriate software language. The software codes may be stored in the memory 160 and executed by the controller 180.

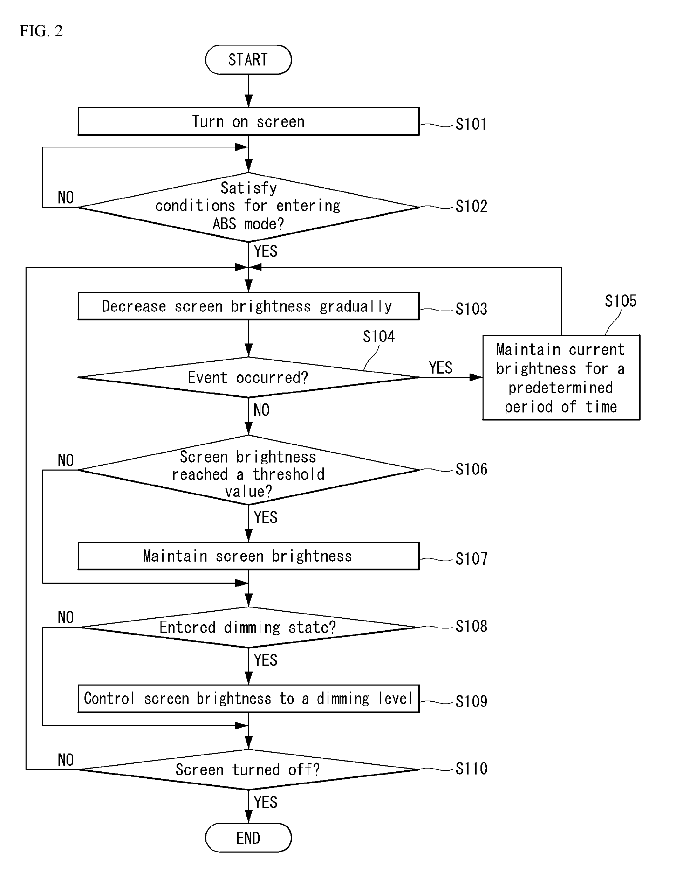

FIG. 2 shows one embodiment of a method for controlling a mobile terminal. According to this method, a brightness of the screen may be controlled to allow for human eye adaptation when going between locations of different brightness or other lighting conditions and/or when certain functions or operations are performed on the terminal.

In accordance with one embodiment, brightness adaptation is performed to adapt the human eye to ambient brightness and/or to discriminate between changes in brightness. The human vision system is able to handle an immensely broad brightness range. The brightness of an object as seen under the sunlight (about 105 lux) and that in the moonlight (about 0.2 lux) are a factor of over one million apart. Irrespective of this fact, the human eye can still perceive objects at the two extreme light conditions.

If a human goes into a basement from the outside in the daytime, he or she perceives darkness of the underground space and recognizes existence of objects only from difference in brightness levels. The human cannot perceive the shape of the objects showing no brightness change, perceiving only darkness for the rest of the space. However, only if a small amount of light exists, after a considerable period of time, shape of the objects begins to be seen and the internal structure of the space can be recognized.

This phenomenon results from the fact that the human eye is unable to discriminate the two different brightness levels, for example, of the outside and the basement at the same time. On the other hand, when the human goes out from the basement to the outside, he or she temporarily loses visual perception and gets vague perception of only the dark area of the outside, the rest of the space appearing almost to be white.

The human visual system may adapt to changes in light in two ways: pupil adaptation due to changes in pupil size and retinal adaptation utilizing sensitivity change in the retina. It takes a considerable period of time for retinal adaptation since sensitivity of the retina has to be changed. The adaptation mechanism relies on adaptation of cones and rods. It takes approximately 10 minutes for the cones to adapt to bright sunlight from darkness, whereas the rods require more than 30 minutes to adapt from bright sunlight to darkness. However, pupil adaptation is performed promptly in a few seconds.

The human visual system for recognizing visual objects can be characterized by its capabilities of perceiving illumination as brightness and discriminating brightness difference, perceiving color, and recognizing geometric relationship based on estimation of spatial structure and physical dimensions.

At this time, in order to bring light sensation to the human visual system, there has to be a stimulating signal, whose magnitude should be above a threshold value in order for the human visual system to properly sense the stimulus. Similarly, in order for a change to be noticed by the human visual system, a stimulus causing the change also should be above a certain threshold value.

Though it varies depending on adaptation state of the human visual system, a relationship holds between increase of stimulus intensity and the corresponding variation in sensory experience. In other words, suppose the initial stimulus intensity R causes a sensation S and the stimulus is increased from the initial value by ΔR and a new sensation level becomes S'. If ΔS represents the difference between S' and S, the following relationship in Equation 1 holds, which is known as Weber's law.

$$\Delta S = k \frac{\Delta R}{R} \qquad (1)$$

The proportional constant is called Weber constant; it does not change for the same stimulus, although it varies depending on the type of stimulus. The equation above is integrated into S = k logR, which signifies that sensation increase in the form of an arithmetic series as the stimulus grows in the manner of geometric series. This is known as Fechner's law; collectively, these findings are called Weber-Fechner's law.

In other words, the human visual system perceives a large amount of brightness when luminance intensity is increased from 10 nits to 20 nits. However, it does not perceive a large amount of brightness when initial luminance intensity of a light stimulus is increased from 100 nits to 110 nits by 10 nits. This situation may be accounted for by one or more embodiments described herein.

With reference to FIG. 2, a controller 180 turns on the screen of mobile terminal 100 (S101). The controller 180 can turn on the screen in response to occurrence of an event such as a user input, a call, another function or operation, or signal received through the user input unit 130. Turning on the screen signifies activation of the display module 151 and subsequent display of information on the screen. After the screen is turned on, controller 180 controls display module 151 so that the screen brightness is adjusted to a predetermined initial brightness value. The initial brightness may be set by the user or may be based on a default value set by the manufacturer of the mobile terminal or the controlling software.

Next, the controller 180 determines whether mobile terminal 100 satisfies one or more conditions for entering automatic brightness stabilization (ABS) mode S102. If the mobile terminal meets the conditions for ABS mode, the controller 180 switches to the ABS mode and gradually changes screen brightness S103. The change may involve reducing screen brightness by a predetermined rate. In other embodiments, the screen brightness may be increased depending, for example, on the initial brightness value.

At step S102, the controller 180 determines whether the mobile terminal is in ABS mode based on factors which include, for example, one or more of adaption time, ambient illumination, initial brightness value, occurrence of user activity, or a watching time of a user.

According to one embodiment, the controller 180 may enter ABS mode after a predetermined adaptation time since the screen was turned on. Here, the adaptation time denotes a period of time for which initial brightness of the screen is maintained so that the user adapts to the initial brightness of the screen through brightness adaptation process, occupying approximately 10 seconds to 1 minute before entering the ABS mode.

Additionally, or alternatively, the controller 180 may enter ABS mode when ambient illumination is above a predetermined threshold value. When ambient illumination is low, brightness contrast noticeable to the human eye is lowered. Therefore, in case of low ambient illumination, lowering screen brightness may cause inconvenience to the user. Therefore, the controller 180 may control the display module 151 to enter ABS mode only when ambient illumination is more than a predetermined threshold value, for example, 400 Lux. The controller 180 can obtain an ambient illumination value using a luminance sensor.

Additionally, or alternatively, the controller 180 may enter ABS mode when the initial brightness is more than a predetermined threshold value. If the initial brightness is too low, lowering screen brightness may cause inconvenience to the user. Therefore, controller 180 may enter ABS mode when, or only if, ambient illumination is more than a predetermined threshold value.

Additionally, or alternatively, the controller 180 may enter ABS mode when a user input is not received for a predetermined period of time while the screen is turned on.

Furthermore, the controller 180 may enter ABS mode if the user does not watch the screen for a predetermined period of time while the screen is turned on. The controller 180 can capture the face image of the user through the camera 121 and obtain a current watching direction of the user through eye tracking. Based on the watching direction of the user, the controller 180 can determine whether the user is watching the screen or not.

As stated, the controller 180 may enter ABS mode if at least one or a predetermined subset of the conditions above is met.

FIG. 2 illustrates an example where the controller enters the ABS mode when one or more of the aforementioned conditions for entering ABS mode are met. (Additionally, or alternatively, if the screen is turned on, controller 180 may immediately enter ABS mode independently of a brightness or other condition for entering ABS mode. That is, once the screen is turned on, screen brightness may immediately be lowered.)

At step S103, the controller 180 controls the display module 151 to decrease screen brightness at one or more predetermined time intervals by a predetermined amount of change. The amount of change in screen brightness for a unit period of time may be determined by a value within a brightness range not noticeable by the human visual system.

The controller 180 can configure the amount of brightness change for a unit period of time to be a brightness value of the smallest unit which can be controlled by the display module 151. In other words, the amount of brightness change can be configured to be a minimum unit of brightness change determined by the brightness resolution of the display module 151. Also, the controller 180 can configure the amount of brightness change for a unit period of time to be a value corresponding to a predetermined ratio of current screen brightness.

In addition, the controller 180 can calculate the amount of change A_Step based on a threshold value A_Limit, initial screen brightness A_init, and a time period required before entering a dimming state tdim as shown in Equation 2.

$$\text{Step} = (\text{A\_init} - \text{A\_Limit}) / \text{tdim} ,$$

$$\text{A\_Step} = \text{Step} \ (\text{Step} <= \text{Ath}), \qquad\qquad (2)$$

$$\text{A\_Step} = \text{Ath} \ (\text{Step} > \text{Ath}),$$

where A_Limit is a value denoting the maximum value of screen brightness change in the ABS mode; A_Limit is the value determined within a brightness range for which the human visual system cannot easily perceive brightness change when the screen brightness gets lower than the initial screen brightness. A_Limit can be obtained from statistical or experimental estimation.

In addition, the dimming time tdim may denote a time period before the screen enters the dimming state since the screen is turned on. The threshold value for a unit period of time Ath may signify a predetermined ratio of current screen brightness and can be configured to be a value within a brightness range for which the human visual system cannot perceive brightness change for a unit period of time. For example, it may correspond to 8% of current screen brightness.

Referring again to FIG. 2, the controller 180 may monitor occurrence of a user event such as a touch input while operating in the ABS mode S104. In case a user event occurs, the controller 180 maintains current screen brightness for a predetermined period of time S105. In other words, operation in the ABS mode is temporarily stopped. Meanwhile, if a predetermined period of time is passed without occurrence of a user event, the controller 180 again starts reducing screen brightness.

The period of time during which the screen brightness is kept constant according to the occurrence of a user event can be configured to be a value corresponding to the maximum duration for which the human visual system can concentrate on a subject, namely, eye fixation duration, which can be obtained from statistical or experimental estimation. For example, the human eye is fixated for 3 to 4 seconds statistically; therefore, the period of time for which screen brightness is kept constant can be configured to a value between 3 and 4 seconds.

While FIG. 2 shows an example of where current screen brightness is kept constant for a predetermined duration upon occurrence of a user event while the display module is operating in ABS mode, in other embodiments the current screen brightness may be varied upon occurrence of a user event or other event not initiated by a user in ABS mode.

According to another embodiment, controller 180 may carry out the operation of decreasing screen brightness continuously irrespective of occurrence of a user event. Also, upon occurrence of a user event, controller 180 may immediately adjust screen brightness to its initial value.

In addition, the controller 180 can gradually (or at a predetermined rate) increase screen brightness at the occurrence of a user event while operating in the ABS mode. In this case, the amount of brightness change for a unit period of time can be configured in the same way as the case where screen brightness is gradually decreased. The controller 180, in case screen brightness reaches its initial brightness value while the screen brightness is gradually increased or a user input is not received for a predetermined time period, again operates in the ABS mode where screen brightness is gradually decreased.

Again, with reference to FIG. 2, the controller 180 continuously monitors whether gradually decreasing screen brightness reaches a predetermined threshold value S106.

The threshold value is a limit value of screen brightness which can vary in the ABS mode; in case screen brightness gets lower than the initial screen brightness, the threshold value can be determined within a brightness range for which the human visual system cannot easily detect brightness change. For example, the threshold value may be determined as a value 22% lower than the initial screen brightness, namely 78% of the initial screen brightness.

The threshold value can be determined according to the remaining battery of the mobile terminal 100. For example, the threshold value can be set to be higher for the case where the remaining battery is sufficient than the opposite case.

The controller 180 can generate a look-up table which lists up threshold values in accordance with the initial screen brightness or remaining battery and manage the look-up table by storing it in the memory 160. In this case, the controller 180 fetches an appropriate threshold value corresponding to the initial screen brightness or remaining battery from the look-up table.

Meanwhile, if screen brightness reaches the threshold value, controller 180 terminates the ABS mode and maintains the screen brightness at the threshold value S107.

The controller 180 checks whether the mobile terminal 100 enters the dimming state S108 and keeps screen brightness at the threshold value before the mobile terminal 100 enters the dimming state.

In case the mobile terminal 100 enters the dimming state, the controller 180 controls the display module 151 to decrease screen brightness to a dimming level S109. Then, the controller 180 maintains screen brightness at the dimming level before the screen is turned off due to deactivation of the display module 151, S110.

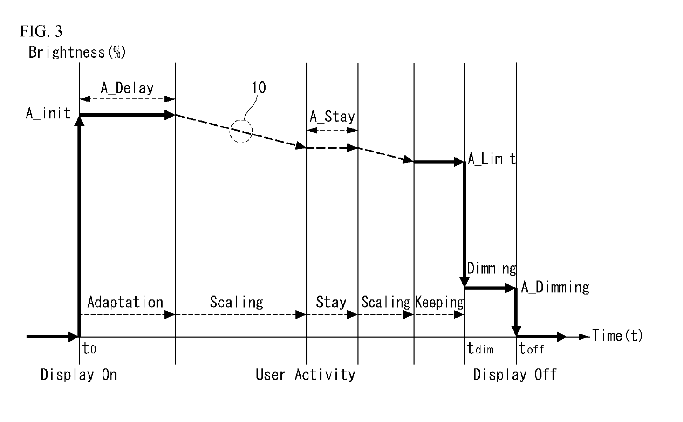

FIG. 3 shows another example of controlling screen brightness of a mobile terminal. With reference to FIG. 3, if the screen is turned on, the controller 180 maintains the initial screen brightness for a predetermined period of time A_Delay. A_Delay is adaptation time configured for the user to adapt to the initial brightness through brightness adaptation process when the screen is turned on, which can be configured to be more than 10 seconds.

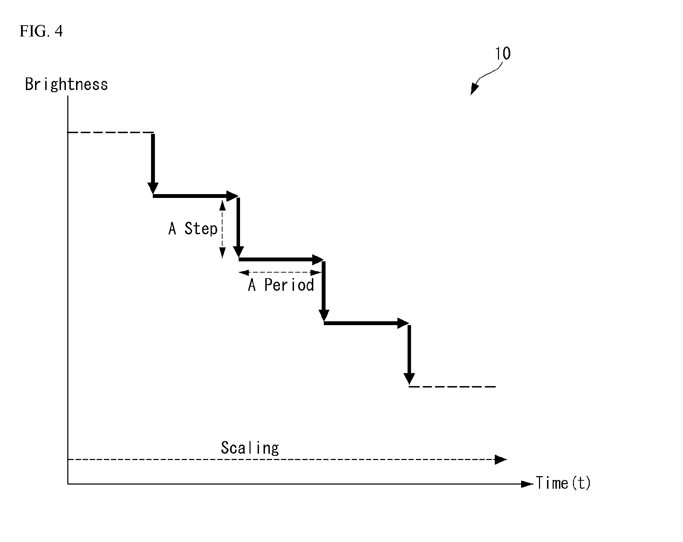

If adaptation time A_Delay is passed, the controller 180 controls the display module 151 to operate in the ABS mode. In other words, the controller 180 controls the display module 151 to carry out screen brightness scaling which periodically decreases screen brightness by a predetermined level. A time interval 10 for which the display module 151 operates in the ABS mode will be described in detail with reference to FIG. 4.

Meanwhile, if a user activity is occurred while the display mode is operating in the ABS mode, the controller 180 controls the display module 151 to operate in the ABS mode where screen brightness is kept constant for a predetermined time period A_Stay and then gradually decreased again.

If screen brightness reaches a predetermined threshold value A_Limit while operating in the ABS mode, the controller 180 terminates the ABS operation and keeps the screen brightness at the threshold value A_Limit. The threshold value is a limit value of screen brightness which can vary in the ABS mode; in case screen brightness gets lower than the initial screen brightness, the threshold value is determined within a brightness range for which the human visual system cannot easily detect brightness change.

For example, suppose the initial screen brightness is 100%. Then the human visual system hardly perceives a brightness value approximately 22% lower than the initial brightness. Accordingly, if the initial screen brightness is 100%, the threshold value may be determined to be about 78% of the initial brightness, which is 22% lower than the initial brightness.

If the dimming time tdim is reached after screen brightness reaches the threshold value, the controller 180 changes the screen brightness to a dimming level A_Dimming and keeps the screen brightness at the dimming level for a predetermined period of time and turns off the screen automatically. In other words, the display module 151 is deactivated.

FIG. 4 shows another example of operating a mobile terminal in ABS mode. With reference to FIG. 4, the controller 180 gradually decreases screen brightness by reducing screen brightness by a predetermined amount of brightness change A_Step at each unit time period A_Period for the interval operating in the ABS mode.

At this time, the period A_Period at which brightness change is occurred is determined by considering the human visual system's brightness adaptation and the adaptation becomes more effective as the brightness change period A_Period is lengthened.

Also, the amount of screen brightness change for a unit period of time A_Period is configured to be a value within a brightness range for which the user is unable to perceive the change or the user reacts sluggishly to the change and can be calculated in various ways as described above.

Meanwhile, according to one embodiment, the controller 180, in case the screen is turned on again after operating for a preetermined period of time in a turn-off state, controls the display module 151 to recover the screen brightness to the predetermined initial screen brightness. Also, the controller 180, in case the screen is turned on again after it is turned off while the screen brightness is in a low level due to the ABS operation, to reduce perception of brightness deviation for the user, may control the display module 151 to gradually increase the screen brightness from the time the screen is turned on, thereby reaching the initial brightness.

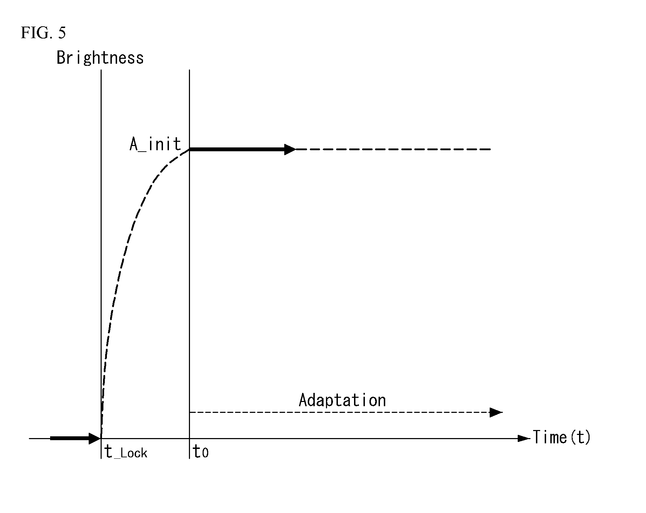

FIG. 5 shows an example of controlling brightness as a screen of a mobile terminal is turned on. With reference to FIG. 5, the controller 180 controls the display module 141 to reach a predetermined initial brightness level A_init by gradually increasing the screen brightness for a predetermined period of time after the screen is turned on. Accordingly, if the screen is turned off while the screen brightness is in a low level due to the ABS operation and is turned on again, the user becomes unable to perceive deviation in the screen brightness.

Meanwhile, as shown in FIG. 5, if a time delay occurs before the screen reaches its initial brightness since the screen is turned on, the controller 180 is allowed to carry out the steps S102 to S110 as the screen brightness gradually increases and reaches the predetermined initial brightness A_init.

In what follows, with reference to appended drawings, a control method of a mobile terminal according to another embodiment and operation of the mobile terminal for implementing the method will be described in detail.

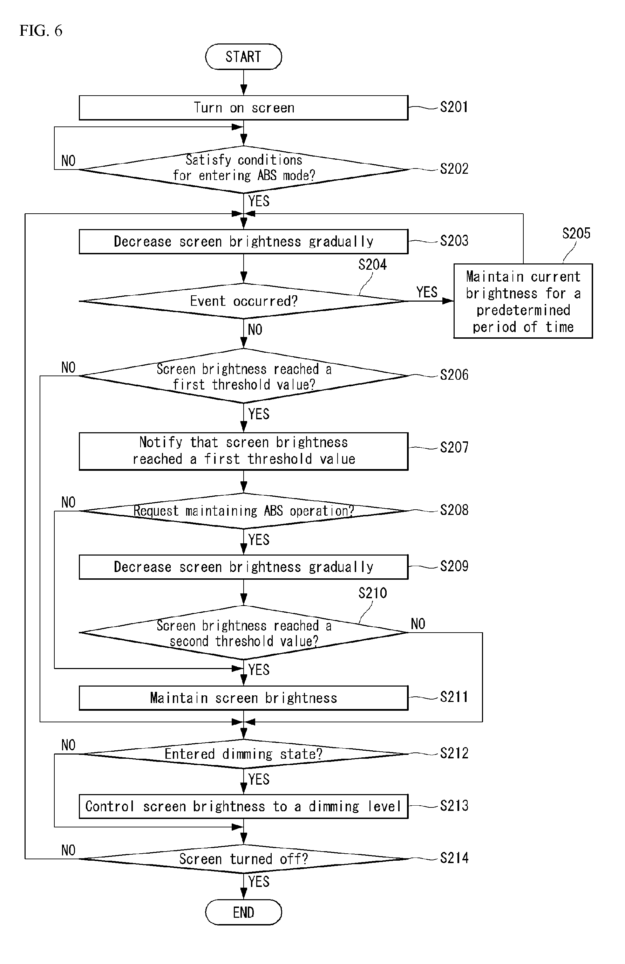

FIG. 6 shows another embodiment of a method of controlling a mobile terminal according to another embodiment. With reference to FIG. 6, the controller 180 can turn on the screen of the mobile terminal 100 in response to occurrence of an event such as a user input, a call, etc. received through the user input unit 130, S201.

Next, the controller 180 determines whether the mobile terminal 100 satisfies the conditions for entering ABS mode S202. If the mobile terminal meets the conditions for the ABS mode, the controller 180 switches to the ABS mode and gradually reduces screen brightness S203.

At the step of S202, the controller 180 can determine whether the mobile terminal is in the ABS mode based on adaption time, ambient illumination, initial brightness value, occurrence of user activity, user's watching time, and so on.

The controller 180 enters the ABS mode after a predetermined adaptation time since the screen is turned on. The controller 180 can also enter the ABS mode when ambient illumination is above a predetermined threshold value. Also, the controller 180 can enter the ABS mode when the initial brightness is more than a predetermined threshold value. In addition, the controller 180 can enter the ABS mode when a user input is not received for a predetermined period of time while the screen is turned on. Furthermore, the controller 180 can enter the ABS mode if the user does not watch the screen for a predetermined period of time while the screen is turned on. The controller 180 enters the ABS mode if at least one of the conditions above is met.

FIG. 6 illustrates an example where the controller enters the ABS mode only when conditions for entering ABS mode are met. According to one embodiment, if the screen is turned on, controller can immediately enter the ABS mode independently of the condition for entering ABS mode. That is, once the screen is turned on, screen brightness is immediately adjusted to be lowered.

Again, with reference to FIG. 6, at step S203, the controller 180 controls the display module 151 to decrease screen brightness at predetermined time intervals by a predetermined amount of change. The amount of change in screen brightness for a unit period of time may be determined by a value within a brightness range not noticeable by the human visual system.

The controller 180 can configure the amount of brightness change for a unit period of time to be a brightness value of the smallest unit which can be controlled by the display module 151. Also, the controller 180 can configure the amount of brightness change for a unit period of time to be a value corresponding to a predetermined ratio of current screen brightness. In addition, the controller 180 can calculate the amount of change based on a threshold value, initial screen brightness, and a time period required before entering a dimming state as described with reference to Equation 2.

Again, with reference to FIG. 2, controller 180 monitors occurrence of a user event such as a touch input while operating in the ABS mode S204. When a user event occurs, controller 180 maintains current screen brightness for a predetermined period of time S205.

Although FIG. 2 illustrates an example where current screen brightness is kept constant for a predetermined duration upon occurrence of a user event while the display module is operating in the ABS mode, this may be varied in other embodiments.

According to one embodiment, controller 180 can carry out the operation of decreasing screen brightness continuously irrespective of occurrence of a user event. Also, the controller 180, upon occurrence of a user event, can immediately adjust screen brightness to its initial value. In addition, the controller 180 can gradually increase screen brightness at the occurrence of a user event while operating in the ABS mode. In this case, the controller 180, in case screen brightness reaches its initial brightness value while the screen brightness is gradually increased or a user input is not received for a predetermined time period, again operates in the ABS mode where screen brightness is gradually decreased.

Meanwhile, the controller 180 continuously monitors whether gradually decreasing screen brightness reaches a predetermined first threshold value S206. Here, the first threshold value can be determined within a brightness range for which the human visual system cannot easily detect brightness change in case the screen brightness is lowered below the initial screen brightness. For example, the first threshold value may be determined as a value 22% lower than the initial screen brightness, namely 78% of the initial screen brightness.

If screen brightness reaches the first threshold value, the controller 180 displays information notifying the screen brightness has reached the first threshold value S207 and waits for the user input choosing whether to continue the ABS operation.

If the user requests to maintain the ABS operation S208, the controller 180 carries out again the ABS operation which gradually decreases the screen brightness S209.

Afterwards, the controller 180 continuously monitors whether gradually decreasing screen brightness reaches a second threshold value S210. Here, the second threshold value is a value denoting the maximum value of screen brightness change in the ABS mode and can be determined within a brightness range for which the human visual system cannot easily detect brightness change in case the screen brightness is lowered below the initial screen brightness. Also, the second threshold value can be determined according to the remaining battery of the mobile terminal 100. The smaller the remaining battery of the mobile terminal 100 becomes, the lower the controller 180 can configure the second threshold value.

If the screen brightness reaches the second threshold value, the controller 180 terminates the ABS mode and maintains the screen brightness at the current level S211. For the case where the request for terminating the ABS operation is received at step S208, too, the controller 180 terminates the ABS mode and maintains the screen brightness at the current state S211.

If the ABS mode is terminated, the controller 180 checks whether the mobile terminal 100 enters the dimming state S212 and maintains the screen brightness at the threshold value before the mobile terminal 100 enters the dimming state.

In case the mobile terminal 100 enters the dimming state, the controller 180 controls the display module 151 to reduce the screen brightness down to the dimming level S213. Afterwards, the controller 180 maintains the screen brightness at the dimming level before the screen is turned off due to deactivation of the display module 151, S214.

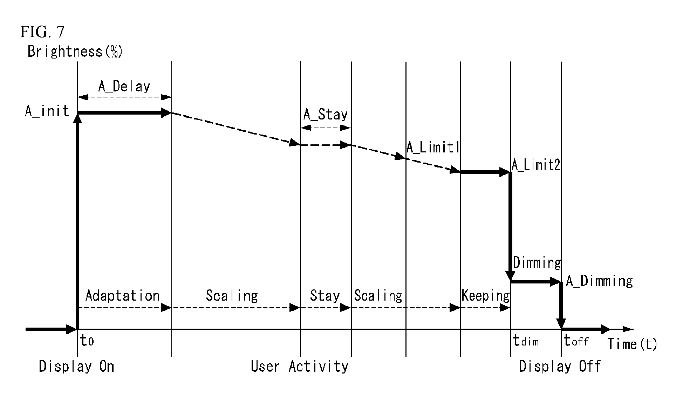

FIG. 7 is one example of controlling screen brightness of a mobile terminal according to another embodiment. With reference to FIG. 7, the controller 180 maintains the initial screen brightness value A_init for a predetermined period of time A_Delay when the screen is turned on. A_Delay is adaptation time configured for the user to adapt to the initial brightness through brightness adaptation process when the screen is turned on, which can be configured to be more than 10 seconds.

If adaptation time A_Delay is passed, the controller 180 controls the display module 151 to operate in the ABS mode. In other words, the controller 180 controls the display module 151 to carry out screen brightness scaling which periodically decreases screen brightness by a predetermined level.

Meanwhile, if a user activity is occurred while the display mode is operating in the ABS mode, the controller 180 controls the display module 151 to operate in the ABS mode where screen brightness is kept constant for a predetermined time period A_Stay and then gradually decreased again.

If screen brightness reaches a predetermined first threshold value A_Limit1 while operating in the ABS mode, the controller 180 notifies the user that the screen brightness has reached the first threshold value and receives the user's choice about whether to maintain the ABS operation. The threshold value is determined within a brightness range for which the human visual system cannot easily detect brightness change in case screen brightness gets lower than the initial screen brightness.

If the user chooses to maintain the ABS operation, the controller 180 carries out the ABS operation continuously as described in FIG. 7. In other words, the screen brightness is continuously decreased.

Afterwards, if the screen brightness reaches a second threshold value A_Limit2, the controller 180 terminates the ABS operation and maintains the screen brightness to the second threshold value A_Limit2. The second threshold value is a limit value of screen brightness which can vary in the ABS mode; in case screen brightness gets lower than the initial screen brightness, the threshold value can be determined within a brightness range for which the human visual system cannot easily detect brightness change.

If the dimming time tdim is reached after screen brightness reaches the second threshold value, the controller 180 changes the screen brightness to a dimming level A_Dimming and keeps the screen brightness at the dimming level for a predetermined period of time and turns off the screen automatically. In other words, the display module 151 is deactivated.

According to one or more embodiments, a mobile terminal, after its screen is turned on, gradually decreases screen brightness within a brightness range for which the user hardly perceives change in screen brightness, thereby reducing power consumption of the mobile terminal 100 and thus extending battery operation time of the mobile terminal 100.

The disclosed methods of controlling the mobile terminal may be written as computer programs and may be implemented in digital microprocessors that execute the programs using a computer readable recording medium. The methods of controlling the mobile terminal may be executed through software. The software may include code segments that perform required tasks. Programs or code segments may also be stored in a processor readable medium or may be transmitted according to a computer data signal combined with a carrier through a transmission medium or communication network.

The computer readable recording medium may be any data storage device that may store data and may be read by a computer system. Examples of the computer readable recording medium may include read-only memory (ROM), random-access memory (RAM), CD-ROMs, DVD±ROM, DVD-RAM, magnetic tapes, floppy disks, and optical data storage devices. The computer readable recording medium may also be distributed over network coupled computer systems such that the computer readable code is stored and executed in a distributed manner.

In accordance with one embodiment, a mobile terminal includes a display screen and a controller to change a brightness of the screen at a predetermined rate based on at least one predetermined condition and, when the screen brightness reaches a threshold value, to maintain the brightness of the screen at the threshold value. The predetermined condition may be based on at least one of screen activation, adaption time, ambient illumination, initial brightness value, occurrence of user activity, or a watching time of a user, and the controller may decrease screen brightness at the predetermined rate when the at least one predetermined condition is satisfied.

The controller may begin changing screen brightness when a duration of an initial brightness of the screen exceeds a predetermined period of time. Also, the terminal may include or be coupled to a sensor to detect an ambient illumination level, and the controller may begin changing screen brightness when the ambient illumination is above a predetermined threshold value and an initial brightness is more than a predetermined threshold value.

The terminal may also include or be coupled to a camera to capture a face image of a user, wherein the controller determines a current watching direction of the user based on the face image and begins changing the screen brightness when the user is not watching the screen for a predetermined period of time.

The controller may begin changing the screen brightness when user activity does not occur for more than a predetermined period of time.

When user activity occurs while changing screen brightness, the controller maintains screen brightness for a predetermined period of time and then restarts an operation of changing the screen brightness.

Also, when user activity occurs while changing screen brightness, the controller increases the screen brightness; and when user activity does not occur again for more than a predetermined period of time or screen brightness reaches an initial brightness, a restart operation of decreasing screen brightness is performed.

Also, the controller may change the screen brightness at predetermined time intervals by a predetermined amount of brightness change, and the amount of brightness change is determined by a value within a brightness range not noticeable by the human visual system. The threshold value may be determined based at least one of the initial brightness or remaining battery of the mobile terminal. Also, the controller may change the screen brightness based on a perception ability of a human eye.

In accordance with another embodiment, a method for controlling a mobile terminal includes changing a brightness of a display screen at a predetermined rate based on at least one predetermined condition and, when the screen brightness reaches a threshold value, maintaining the screen brightness at the threshold value. The predetermined condition may be based on at least one of screen activation, adaption time, ambient illumination, initial brightness value, occurrence of user activity, or a watching time of a user, and the changing operation may include decreasing screen brightness at the predetermined rate when the at least one predetermined condition is satisfied.

Also, the changing operation may include changing screen brightness when a duration of an initial brightness of the screen exceeds a predetermined period of time.

Also, the method may include detecting an ambient illumination level, wherein the changing operation includes changing screen brightness when the ambient illumination is above a predetermined threshold value and an initial brightness is more than a predetermined threshold value.

Also, the method may include capturing a face image of a user, determining a watching direction of the user based on the face image, and changing the screen brightness when the user is not watching the screen for a predetermined period of time. Changing the screen brightness may also be performed when user activity does not occur for more than a predetermined period of time.

Also, the changing operation may include changing the screen brightness at predetermined time intervals by a predetermined amount of brightness change, wherein the amount of brightness change is determined based on a value within a brightness range not noticeable by the human visual system.

Herein, the suffixes "module" and "unit" are used in reference to components of the mobile terminal for convenience of description and do not have meanings or functions different from each other.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments. The features of one embodiment may be combined with the features of one or more of the other embodiments.

Although embodiments have been described with reference to a number of illustrative embodiments, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

**Claims**

1. A mobile terminal, comprising:

   a display screen; and
   a controller adapted to change a brightness of the screen at a predetermined rate based on at least one predetermined condition and, when the screen brightness reaches a threshold value, to maintain the brightness of the screen at the threshold value.

2. The mobile terminal of claim 1, wherein the predetermined condition is based on at least one of screen activation, adaption time, ambient illumination, initial brightness value, occurrence of user activity, or a watching time of a user.

3. The mobile terminal of claim 1 or 2, wherein the controller is adapted to decrease screen brightness at the predetermined rate when the at least one predetermined condition is satisfied.

4. The mobile terminal of claim 1, 2 or 3, wherein the controller is adapted to begin changing screen brightness when a duration of an initial brightness of the screen exceeds a predetermined period of time.

5. The mobile terminal of claim 1, 2 or 3, further comprising:

   a sensor to detect an ambient illumination level,
   wherein the controller is adapted to begin changing screen brightness when the ambient illumination is above a predetermined threshold value and an initial brightness is more than a predetermined threshold value.

6. The mobile terminal of claim 1, 2 or 3, further comprising:

a camera to capture a face image of a user,
wherein the controller is adapted to determine a current watching direction of the user based on the face image and to begin changing the screen brightness when the user is not watching the screen for a predetermined period of time.

7. The mobile terminal of claim 1, 2 or 3, wherein the controller is adapted to begin changing the screen brightness when user activity does not occur for more than a predetermined period of time.

8. The mobile terminal of anyone of the preceding claims, wherein, when user activity occurs while changing screen brightness, the controller is adapted to maintain screen brightness for a predetermined period of time and to restart then changing the screen brightness.

9. The mobile terminal of anyone of claims 1 to 7, wherein the controller is adapted

- to increase the screen brightness when user activity occurs while changing screen brightness; and
to restart decreasing screen brightness when user activity does not occur again for more than a predetermined period of time or to maintain the screen brightness when the screen brightness reaches an initial brightness.

10. The mobile terminal of anyone of the preceding claims, wherein the threshold value is determined based at least one of the initial brightness or remaining battery of the mobile terminal.

11. The mobile terminal of claim 1, wherein the controller is adapted to change the screen brightness based on a perception ability of a human eye.

12. The mobile terminal of claim 11, wherein:

the controller is adapted to change the screen brightness at predetermined time intervals by a predetermined amount of brightness change, wherein the amount of brightness change is determined so as to be not noticeable by the human visual system.

13. A method for controlling a mobile terminal, comprising:

decreasing a brightness of a display screen at a predetermined rate based on at least one predetermined condition; and
when the screen brightness reaches a threshold value, maintaining the screen brightness at the threshold value.

14. The method of claim 13, wherein the predetermined condition is based on at least one of screen activation, adaption time, ambient illumination, initial brightness value, occurrence of user activity, or a watching time of a user.

15. The method of claim 13, wherein the screen brightness is decreased when a duration of an initial brightness of the screen exceeds a predetermined period of time.

FIG. 1

FIG. 2

FIG. 3

Brightness(%)

A_init

A_Delay

10

A_Stay

A_Limit

Dimming

A_Dimming

Adaptation | Scaling | Stay | Scaling | Keeping

t0

t<sub>dim</sub>  t<sub>off</sub>

Time(t)

Display On

User Activity

Display Off

FIG. 4

10

Brightness

A Step

A Period

Scaling

Time(t)

FIG. 5

FIG. 6

```
                    ( START )
                        │
          ┌─────────────────────────────┐
          │      Turn on screen         │──── S201
          └─────────────────────────────┘
                        │
         ┌──────────────▼──────────────┐
  NO ◄───┤   Satisfy conditions        │──── S202
         │   for entering ABS mode?    │
         └──────────────┬──────────────┘
                      YES
          ┌─────────────────────────────┐
    ┌─────┤ Decrease screen brightness  │──── S203
    │     │        gradually            │
    │     └──────────────┬──────────────┘
    │                    │                        S205
    │     ┌──────────────▼──────────────┐  YES  ┌──────────────┐
    │     │      Event occurred?        ├──────►│Maintain current│
    │     └──────────────┬──────────────┘       │brightness for a│
    │                   NO                        │ predetermined │
    │     ┌──────────────▼──────────────┐        │period of time │
NO ◄┼─────┤ Screen brightness reached a │──S206  └──────────────┘
    │     │    first threshold value?   │
    │     └──────────────┬──────────────┘
    │                   YES
    │     ┌─────────────────────────────┐
    │     │  Notify that screen         │──── S207
    │     │  brightness reached a       │
    │     │  first threshold value      │
    │     └──────────────┬──────────────┘
    │     ┌──────────────▼──────────────┐
NO ◄┼─────┤ Request maintaining ABS op? │──── S208
    │     └──────────────┬──────────────┘
    │                   YES
    │     ┌─────────────────────────────┐
    │     │ Decrease screen brightness  │──── S209
    │     │        gradually            │
    │     └──────────────┬──────────────┘
    │     ┌──────────────▼──────────────┐ NO
    │     │ Screen brightness reached a ├───┐
    │     │   second threshold value?   │   │
    │     └──────────────┬──────────────┘   │
    │                   YES                  │
    │     ┌─────────────────────────────┐   │
    │     │   Maintain screen brightness│─S211
    │     └──────────────┬──────────────┘
    │     ┌──────────────▼──────────────┐
NO ◄┼─────┤     Entered dimming state?  │──── S212
    │     └──────────────┬──────────────┘
    │                   YES
    │     ┌─────────────────────────────┐
    │     │Control screen brightness to │─S213
    │     │       a dimming level       │
    │     └──────────────┬──────────────┘
    │     ┌──────────────▼──────────────┐
NO ◄┴─────┤      Screen turned off?     │──── S214
          └──────────────┬──────────────┘
                        YES
                    (  END  )
```

FIG. 7

Europäisches
Patentamt

European
Patent Office

Office européen
des brevets

# EUROPEAN SEARCH REPORT

Application Number

EP 13 16 6776

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2010/245310 A1 (HASHIMOTO MASAHIRO [JP]) 30 September 2010 (2010-09-30)<br>* paragraph [0002] - paragraph [0004] *<br>* paragraph [0030] - paragraph [0048] *<br>----- | 1-5,7-15<br><br>6 | INV.<br>H04M1/22 |
| Y | US 2007/078552 A1 (ROSENBERG LOUIS B [US]) 5 April 2007 (2007-04-05)<br>* paragraph [0004] - paragraph [0011] *<br>* paragraph [0034] *<br>* paragraph [0059] - paragraph [0065] *<br>----- | 6 | |

TECHNICAL FIELDS
SEARCHED      (IPC)

H04M

The present search report has been drawn up for all claims

| Place of search | Date of completion of the search | Examiner |
|---|---|---|
| Munich | 31 October 2013 | Radoglou, Athanassia |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 13 16 6776

This annex lists the patent family members relating to the patent documents cited in the above-mentioned European search report.
The members are as contained in the European Patent Office EDP file on
The European Patent Office is in no way liable for these particulars which are merely given for the purpose of information.

31-10-2013

| Patent document cited in search report | | Publication date | Patent family member(s) | | Publication date |
|---|---|---|---|---|---|
| US 2010245310 | A1 | 30-09-2010 | JP | 5288281 B2 | 11-09-2013 |
| | | | US | 2010245310 A1 | 30-09-2010 |
| | | | WO | 2009057527 A1 | 07-05-2009 |
| US 2007078552 | A1 | 05-04-2007 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020120079149